(19) Europäisches Patentamt
European Patent Office
Office européen des brevets

(11) **EP 1 790 977 A1**

(12) **EUROPEAN PATENT APPLICATION**

(43) Date of publication:
**30.05.2007 Bulletin 2007/22**

(51) Int Cl.:
***G01N 27/12*** *(2006.01)*

(21) Application number: **05025558.7**

(22) Date of filing: **23.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SONY DEUTSCHLAND GMBH**
**50829 Köln (DE)**

(72) Inventors:
- **Krasteva, Nadejda**
  **c/o Stuttgart Technology Center**
  **70327 Stuttgart (DE)**
- **Vossmeyer, Tobias**
  **c/o Stuttgart Technology Center**
  **70327 Stuttgart (DE)**
- **Yasuda, Akio**
  **c/o Stuttgart Technology Center**
  **70327 Stuttgart (DE)**

(74) Representative: **Appelt, Christian W.**
**FORRESTER & BOEHMERT**
**Anwaltssozietät**
**Pettenkoferstrasse 20-22**
**80336 München (DE)**

# (54) Nanoparticle/nanofiber based chemical sensor, arrays of such sensors, uses and method of fabrication thereof, and method of detecting an analyte

(57) The present invention relates to a nanoparticle/nanofiber based chemical sensor and arrays of such sensors, to a method of fabrication thereof and to uses thereof, and furthermore relates to a method of detecting an analyte. In particular, the present invention relates to a chemical sensor having an enhanced selectivity and/or sensitivity, and it relates to a method of detecting an analyte at enhanced selectivity and/or sensitivity.

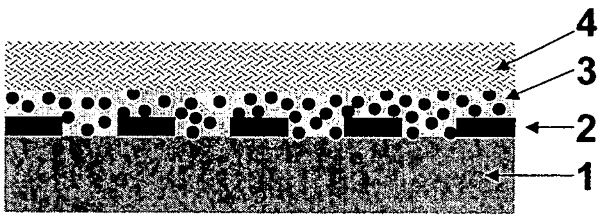


Figure 1

EP 1 790 977 A1

## Description

The present invention relates to a nanoparticle/nanofiber based chemical sensor and arrays of such sensors, to a method of fabrication thereof and to uses thereof, and furthermore relates to a method of detecting an analyte. In particular, the present invention relates to a chemical sensor having an enhanced selectivity and/or sensitivity, and it relates to a method of detecting an analyte at enhanced selectivity and/or sensitivity.

It is known from the prior art that nanoparticles can be used in the detection of analytes. They are for example used in chemiresistor sensors or optical sensors, wherein the optical or electrical properties change in response to the presence of an analyte to be detected.

Chemiresistor sensors for detection of analytes in the fluid phase (e.g. gas and vapor) based on conductive nanocomposite materials include an electrically conductive component that is allocated in a non-conductive or semi-conductive medium. As conductive component metal nanoparticles, carbon black nanoparticles, or conductive nanofibers may be used. The non-conductive component is typically an organic material, which acts as a continuous phase in which the conductive particles are distributed. The non-conductive material may also comprise functionalized organic molecules that serve either as capping ligands for the metal nanoparticles or to interlink the particles in a 3D network.

The operating principle of these sensors comprises a measurement of the change in the film resistance caused by sorption of analytes in the composite material. It is believed that the sensitivity of the chemiresistors depends on the ability of the composite material to undergo volumetric change in presence of analytes. The chemical selectivity of the chemiresistors depends to a certain degree on the chemical composition and the presence of specific functionalities in the organic component of the nanocomposite material. Typically, the detection limit to analytes of these chemiresistors lies in the low parts-per-million (ppm) concentration range.

Numerous studies have been carried out on improving the sensitivity and the chemical selectivity of inorganic/organic composite chemiresistors to analytes via modification of the chemical composition of the sensitive layer [1]. An approach for increasing selectivity of metal oxide chemiresistors by placing a semi permeable membrane on top of the metal oxide sensitive layer is known [2]. An approach for increasing sensitivity of gas/vapor sensors using ancillary preconcentrator spatially decoupled from the sensor is also known [3]. The aforementioned prior art can be summarized as follows:

[1] Improvement of selectivity/sensitivity of inorganic/organic nanocomposite chemiresistors
EP1215485 describes a method for preparation of highly selective nanoparticle/organic interlinked sensors via introducing selectivity enhancing units in the linker molecules. Introducing additional fine tuning unit in a close proximity of the selectivity-enhancing functionality can achieve a fine-tuning of the selectivity.
WO9927357 describes a sensor based on films of thiol-encapsulated Au-nanoparticles where the selectivity of the sensor is tailored by introducing functionality to the ligand shell thereby providing active sites for sorption of target analytes.
US6290911 discloses a method to tune the selectivity of carbon black/polymer chemiresistors by varying the composition of the organic component using blends of polymers and/or polymer/monomer mixtures.

[2] Improvement of the chemical selectivity of metal oxide chemiresistor sensors using semi permeable membranes
US6012327 describes a method for increasing the selectivity of gallium oxide semiconductive gas sensor by deposition of a filter layer comprising either silicon dioxide or another gas sensitive metal oxide atop of the gallium oxide layer.
K. K. Wong et al. (Tencon'95. Proc. IEEE Int. Conference on Microelectronics and VLSI, 1995, 179-182) describe the use of thermo resistive polymer coating to enhance the selectivity of commercial semiconductive gas sensors (FIGARO).
E. Hedborg et al. (Sensors and Actuators B 7, 1992, 661-664) describe the use of positive and negative photoresist membranes for modification of the selectivity of field-effect gas sensors.

[3] Ancillary preconcentrator units for improvement of the sensitivity of gas/vapor sensors - examples:
US6171378 describes a chemical preconcentrator to be used in forming a high-sensitivtiy miniaturized chemical analysis system.
Davis et al. (Sensors and Actuators B 104, 2005, 207-216) describe a micromachined hot plate preconcentrator coupled to an array of chemiresistors comprised of carbon particles impregnated polymer film to decrease the detection limit for analytes (i.e. increase sensitivtiy of the sensor).
Q.-Y. Cai et al. (Anal. Chem. 74, 2002, 3533-3539) describe the use of a dual-adsorbent capillary minipreconcetrator in conjunction with a gas chromatography (GC) column and an array of metal nanoparticle chemiresistors for analysis of a multicomponent vapor mixture.
Snow et al. (Science, 307, 2005, 1942-1945) describe a single-walled carbon nanotube (SWNT) capacitor, wherein

a network of carbon nanotubes is covered by a chemoselective polymer layer. The resultant sensors are described as having slow response rates. The polymeric layer has a thickness >100 nm.

Despite of the promising results obtained with prior art approaches, there is still need for an improvement of the sensitivity and selectivity of sensors, e.g. chemiresistors, towards target analytes. Accordingly, it was an object of the present invention to provide for improved chemical sensors based on nanoparticles having enhanced sensitivity and/or selectivity. Furthermore, it was an object of the present invention to provide for a method of fabrication of a chemical sensor based on nanoparticles which allows the fabrication of sensors having selectivity patterns chemically distinct from each other despite being based on the very same nanoparticle material used therein.

All these objects are solved by a chemical sensor comprising

- a substrate,
- an analyte sensitive layer on top of said substrate, said analyte sensitive layer comprising electrically conductive or semiconductive particles or fibers, said particles or fibers having an average diameter <1 μm, preferably <500 nm, \
- a polymeric layer on top of said analyte sensitive layer, said polymeric layer comprising at least one type of electrically non-conductive or semiconductive polymer or comprising at least one type of polymer electrolyte.

In one embodiment said analyte sensitive layer comprises electrically conductive or semiconductive particles, said particles having an average diameter < 1μm, preferably < 500 nm, more preferably a diameter in the range of from 1 nm to 100 nm, most preferably 1 nm to 50 nm.

It should be noted that said nanoparticles may adopt a number of shapes, including but not limited to nanospheres, nanorods, nanodisks, or they may have an irregular shape or a fractal shape, e.g. multi-pod, star like or spiky.

In a preferred embodiment, said analyte sensitive layer comprises these particles only, including an organic polymeric medium and/or organic ligands and/or organic linkers, but does not comprise fibers.

In one embodiment said analyte sensitive layer further comprises an organic medium, preferably an organic polymeric medium, which organic polymeric medium is electrically non-conductive or semiconductive, and said electrically conductive or semiconductive particles are embedded in said organic medium. It should be noted that said electrically conductive or semiconductive particles are preferably separated from each other by said organic medium.

In another embodiment said analyte sensitive layer does not comprise an organic polymeric medium, and said electrically conductive or semiconductive particles are linked to each other by organic linker molecules, or said electrically conductive particles are capped by organic ligand molecules.

In the case of fibers, these are preferably not embedded in an organic medium nor are they linked or capped by organic linker or ligand molecules. They are simply deposited on said substrate without an organic medium and without organic linker or ligand molecules.

In one embodiment said analyte sensitive layer has a thickness ≤ 1 μm, preferably ≤ 500 nm, more preferably in the range of from 1 nm to 300 nm.

In one embodiment said polymeric layer has a thickness < 10 μm, preferably < 1 μm, more preferably ≤ 100 nm, even more preferably < 70 nm and most preferably in the range of from 1 nm to 50 nm.

In one embodiment the ratio of thickness of said polymeric layer to said analyte sensitive layer is in the range of from 10000 to 0.001, preferably in the range of from 10 to 0.01, more preferably 1 to 0.01, and most preferably 1 to 0.1.

Preferably, said at least one type of electrically non-conductive or semiconductive polymer or polymer electrolyte has an average molecular mass in the range of from 1000 to $10^6$.

In one embodiment said at least one type of electrically non-conductive or semiconductive polymer is selected from the group comprising synthetic polymers, i.e. homopolymers like poly(amide), poly(amido amine), poly(propylene imine), poly(phenylene), poly(ethylene oxide), poly(ethylene imine), hyperbranched poly(ethylene imine) poly(N-isopropyl acrylamide), poly(ethylene glycol), poly(vinyl pyrrolidone), poly(styrene), poly(vinyl alcohol), poly(4-vinyl phenol), poly(epichchlorohydrin), poly(isobutylene), poly(vinyl acetate), poly(methyl methacrylate), poly(caprolactone), fluoropolyols, polysiloxanes, polyaniline, polythiophene, polypyrrol or copolymers like poly(ethylene oxide)-*co*-poly(amido amine), poly (ethylene-*co*-vinyl acetate), poly(styrene-*co*-allyl alcohol), poly(vinyl chloride-*co*-vinyl acetate), poly(styrene-*co*-maleic anhydride), poly(vinyl methyl ester-*co*-maleic anhydride) and combinations thereof, and the at least one type of polymer electrolyte is selected from the group comprising synthetic polymer electrolytes such as poly(styrene sulfonate), poly(styrene sulfonate) sodium salt, poly(allylamine hydrochloride), polyacrylic acid, poly(diallyl dimethyl) ammonium chloride, and combinations thereof. In addition, said at least one type of electrically non-conductive or semiconductive polymer or polymer electrolyte can be selected from a group comprising natural polymers and/or polymer electrolytes, e.g. dextran, chitin, chitosan, cellulose, polypeptides, proteins, RNA, DNA.

In one embodiment, said polymeric layer also comprises particles or fibres, said particles or fibres having an average diameter < 1 μm, preferably < 500 nm, wherein said particles or fibres are of a material that is different from the material of the at least one type of electrically non-conductive or semiconductive polymer.

Preferably, such particles or fibers are selected from the group comprising particles or fibers from adsorbent materials such as Tenax™, Chemosorb™, Carbosieve™, Carbotrap™, Carboxen™, Carbopack™, of all of which are commercially available.

In one embodiment, said polymeric layer is made of a composite material of at least one type of polymer as described above and particles or fibres, as described above, of a material different to said polymer.

In one embodiment, said analyte sensitive layer and said polymeric layer have different sorption capability or swelling capability towards analytes present in the surroundings of the sensor.

In one embodiment, said polymeric layer acts as an in-situ preconcentration unit, spatially coupled to the analyte sensitive layer, for specific analytes thus leading to an enhanced sensitivity of the sensor for these analytes.

In one embodiment said substrate has one or several electrodes, preferably an interdigitated electrode structure thereon, or it has one or several field effect transistors (FETs) thereon, and said analyte sensitive layer on top of said substrate is in contact with said one or several electrodes or is in contact, typically through an insulating layer, with at least one conductive channel of said one or several field effect transistors, or forms itself the conductive channel of said one or several field effect transistors.

In one embodiment said polymeric layer and/or said substrate is transparent for electromagnetic radiation having a wavelength in the range of from 100 nm to 10000 nm, including UV, visible and IR radiation.

Preferably, said electrically conductive or semiconductive particles are selected from the group comprising metal particles, i.e. noble metal particles such as Au, Pt, Ag, Pd, coinage metal particles such as Cu, Ni, Fe. It is also possible to use combinations of these metals in a single nanoparticle, i.e. to build an alloy or core/shell metal nanoparticles. It is also possible to use semiconductive nanoparticles, i.e. II/VI semiconductors such as CdS, CdSe, CdTe, ZnS, ZnSe, ZnTe, HgS, HgSe, HgTe, or III/V semiconductors such as GaAs, InP, or provide conducting or semiconducting nanoparticles from organic materials, such as conductive polymers. Further, it is also possible to use as conductive particles carbon black particles or metal-decorated carbon black particles, e.g. PtRu/carbon black and Pt/carbon black nanoparticles.

In one embodiment said analyte sensitive layer comprises electrically conductive fibers said fibers having an average diameter < 1 μm, preferably < 500 nm, more preferably < 100 nm, wherein, preferably said electrically conductive fibers are selected from the group comprising metal oxide nanofibers such as vanadium oxide, molybdenum oxide, tungsten oxide nanofibers or a combination thereof, and carbon nanotubes. It is also possible to use conductive or semiconductive nanofibers of organic materials, such as conductive polymers.

In one embodiment said organic medium is electrically insulating or semi-conducting and is made of at least one polymer. As used herein, the terms "organic medium" and "organic matrix" are used interchangeably.

Such an organic polymeric medium may comprise poly(amide), poly(amido amine), poly(propylene imine), p oly(phenylene), poly(ethylene oxide), poly(ethylene imine), hyperbranched poly(ethylene imine) poly(N-isopropyl acrylamide), poly(ethylene glycol), poly(vinyl pyrrolidone), poly(styrene), poly(vinyl alcohol), poly(4-vinyl phenol), poly(epichchlorohydrin), poly(isobutylene), poly(vinyl acetate), poly(methyl methacrylate), poly(caprolactone) fluoropolyols, polysiloxanes, polyaniline, polythiophene, polypyrrol, or copolymers like poly(ethylene oxide)-*co*-poly(amido amine), poly (ethylene-*co*-vinyl acetate), poly(styrene-*co*-allyl alcohol), poly(vinyl chloride-*co*-vinyl acetate), poly(styrene-*co*-maleic anhydride), poly(vinyl methyl ester-*co*-maleic anhydride) and combinations thereof.

In another embodiment said organic ligand molecules (capping molecules) are mono-, bi- or polyfunctional organic compounds that are able to attach to the surface of the conductive particles with one of their functional groups (anchor group). Such anchor groups are preferably selected from the groups comprising sulfur-containing functionality, or nitrogen-containing functionality, or phosphor-containing functionality, or oxygen-containing functionality, as in the examples given below.

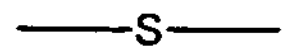
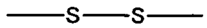
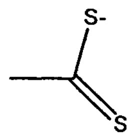
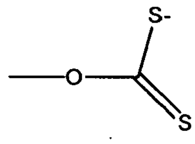

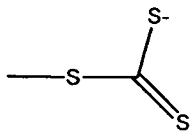
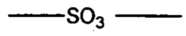
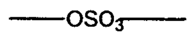

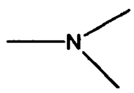
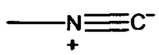
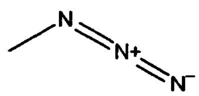
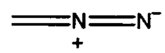

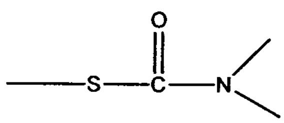
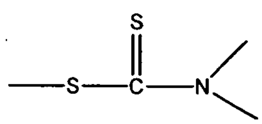
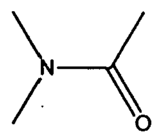

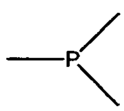
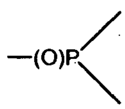
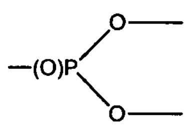
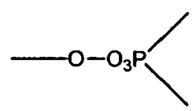

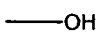
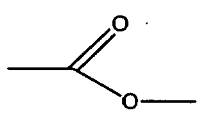

In another embodiment said organic linker molecules are bi- or polyfunctional organic compounds that are able to attach to the surface of the conductive particles with at least two of their functional groups (anchor groups) and are preferably selected from the groups comprising sulfur-containing functionality, or nitrogen-containing functionality, or phosphor-containing functionality, or oxygen containing functionality, as in the examples given above for the ligand molecules.

In the case when the above-mentioned functional groups form a terminal group, the valences not bound to the linker or ligand molecule may carry a hydrogen atom, or a small alkyl unit, or may be deprotonated to form an ionic unit.

Preferably, said polymeric layer is continuously and homogeneously distributed over the surface of said analyte sensitive layer.

Preferably the chemical sensor according to the present invention further comprises an analyte to be detected, and said at least one type of electrically non-conductive or semiconductive polymer or polymer electrolyte is selected in terms of its polarity so as to match the polarity of said analyte to be detected.

Preferably the chemical sensor arrangement according to the present invention further comprises an analyte to be detected, and said at least one type of electrically semiconductive or conductive polymer is selected in terms of its electron transport properties (e.g. hole or electron conductor) so as to correlate with the electron donating/withdrawing ability of said analyte to be detected.

The objects of the present invention are also solved by a chemical sensor array comprising at least two sensors, preferably a plurality of sensors according to the present invention, wherein the individual sensors differ from each other in the type of electrically non-conductive or semiconductive polymer or polymer electrolyte in their respective polymeric layer, and/or in the combination between their respective polymeric and analyte sensitive layers, thus affording a different

chemical selectivity for each sensor. By using an appropriate pattern recognition analysis, different analytes can be identified based on the differences between the chemical selectivity patterns of the sensors in the array.

Alternatively, an array in accordance with the present invention may comprise identical sensors, which only differ from each other in the thickness of their respective polymeric layer within the array thus affording a temporal resolution of analyte detection. Variations in the thickness of the polymeric layer allow the response times to be varied between different sensors, i.e. shortened or extended. This gives the possibility to build a sensor array of compositionally identical sensors (which have identical materials in their respective analyte sensitive layers and polymeric layers respectively), which sensors only differ in their position within the array and their response times. Thus, different analytes may cause differently patterned responses. By using an appropriate pattern recognition analysis, different analytes can be identified based on the variation in the temporal response between the sensors in the array.

Alternatively, it is also possible to provide an array of compositionally different sensors which sensors additionally also differ from each other in the thickness of their respective polymeric layers, thus combining a chemical selectivity and temporal resolution in the same array.

The objects of the present invention are also solved by a method of detecting an analyte using a substrate and an analyte sensitive layer on top of said substrate, said analyte sensitive layer comprising electrically conductive or semiconductive particles or fibers, said particles or fibers having an average diameter < 1 μm, preferably < 500 nm, and further using a polymeric layer on top of said analyte sensitive layer, said polymeric layer comprising at least one type of electrically non-conductive or semiconductive polymer or at least one type of polymer electrolyte, characterized in that

- said analyte sensitive and/or said polymeric layer is/are exposed to said analyte and said analyte is sorbed in or to at least said polymeric layer,
- and, upon sorption, preferably upon sorption in or to said polymeric layer and/or to said analyte sensitive layer, said analyte is detected, preferably by measuring a change of electrical resistance, or by measuring a change in work function, a change of current through a conductive channel of FET which interacts with the said sensitive layer, or by measuring a change of reflectance, a change of refractive index, a change of luminescence, preferably fluorescence emission, phosphorescence emission or absorbance, of said analyte sensitive layer, or by measuring a change in UV/visible or IR absorbance or transmittance spectrum of said analyte sensitive layer.

Preferably, in the method of detecting an analyte in accordance with the present invention, said substrate, said analyte sensitive layer and said polymeric layer are as defined further above.

The objects of the present invention are also solved by a method of fabricating the chemical sensor or the array of the present invention, characterized by the following steps:

- providing a substrate
- depositing on said substrate an analyte sensitive layer by depositing electrically conductive or semiconductive particles or fibers having an average diameter < 1 μm, preferably < 500 nm, thereon, preferably by a layer-by-layer deposition, dip-coating, spin-coating, drop casting, spray coating, ink-jet printing, stamping, Langmuir-Blodgett, Langmuir Schäfer disposition or ligand-exchange precipitation from solution, during which depositing said particles become embedded in an electrically non-conductive or semiconductive medium, preferably an electrically non-conductive or semiconductive polymeric medium, or become linked to each other through organic linker molecules, or remain or become capped by organic ligand molecules,
- depositing on said analyte sensitive layer a polymeric layer, preferably by a layer-by-layer deposition, dip-coating, spin-coating, drop casting, spray coating, ink-jet printing, stamping, Langmuir-Blodgett, Langmuir Schäffer deposition,

wherein said substrate, said analyte sensitive layer, said components of the analyte sensitive layer including said organic medium, if present, and including said electrically conductive or semiconductive particles or fibres, and said polymeric layer are as defined further above, and in the case of an array according to the present invention, repeating these steps as many times as are necessary for producing the at least two, preferably the plurality of sensors.

Preferably, in the method of fabricating the chemical sensor or the chemical sensor array according to the present invention, said substrate, said analyte sensitive layer, said components of the analyte sensitive layer, including said organic medium, if present, and including said electrically conductive or semiconductive particles or fibres, and said polymeric layer are as defined further above.

In the case of fibers being used in the fabrication, these are preferably simply deposited without an organic medium or organic ligand or linker molecules, whereas electrically conductive or semiconductive particles are deposited with such organic medium or ligand molecules.

The objects of the present invention are also solved by a use of the chemical sensor or of the array according to the present invention for detecting an analyte, preferably in the fluid phase.

The inventors have surprisingly found that the deposition and presence of a polymeric layer on top of the analyte sensitive layer comprising nanoparticles or nanofibres greatly enhances the sensitivity towards a target analyte and may also influence and improve the selectivity of a nanoparticle based analyte sensor. Without wishing to be bound by any theory, the inventors presently believe that the presence of an additional layer on top of the analyte sensitive layer, which additional layer is a polymeric layer, serves to concentrate the analyte in the vicinity of the analyte sensitive layer and therefore leads to an increase in the analyte concentration in the sensitive layer, which ultimately results in a higher signal from the analyte sensitive layer. Furthermore, the polymeric layer on top of the analyte sensitive layer may modify the interaction between the analyte and the analyte sensitive layer and may thus lead to an increase in selectivity for a given analyte sensitive layer.

The term "nanoparticle" or "nanofibre", as used herein, is meant to designate particles or fibres which have characteristic dimensions < 1 μm. Further, such nanoparticles can have different shapes, i.e. faceted (spherical), rod-like, disk-like, or fractal, e.g. multi-pod, star-like, spiky. Typically the characteristic diameter of these nanoparticles and/or nanofibers, at an average, is < 1 μm, preferably ≤ 500 nm, and even more preferably ≤ 300 nm. In a preferred embodiment said particles or fibres have an averange diameter in the range of from 1 nm to 100 nm, most preferably from 1 nm to 50 nm. However, the actual size of the respective nanoparticles/nanofibres also depends on the respective analyte to be detected, since the size of a nanoparticle/nanofibre may also determine and/or affect its chemical selectivity towards specific analytes. In no case, however, will the dimensions of said nanoparticles be > 1 μm or the diameter of said n anofibres be > 1 μm. In turn, p articles or fibers complying with the aforementioned dimension requirements may also be referred to as "nanoparticles" or "nanofibres" within the present application.

The term " analyte sensitive layer", as used herein, is meant to designate a layer which, in response to the presence of an analyte, yields a measurable signal that can be detected by conventional means, for example by measuring the chemical resistance of this layer or by measuring its optical properties, such as IR, UV/Vis absorbance or transmittance, or reflectance, or luminescence properties, for example fluorescence and/or phosphorescence emission.

The term "sorption in (a layer)" "or "sorption to (a layer)", as used herein is meant to denote absorption and/or adsorption. It may imply one or the other process taking place or both.

Typically, the substrate of the chemical sensor arrangement according to the present invention is not particularly limited and may for example be glass, ceramics, silicon, or plastic. The nanoparticles or nanofibres which, themselves, are electrically conductive may be embedded in a non-conductive or semi-conductive organic medium or matrix, or they may be capped with organic ligand molecules or interlinked with organic linker molecules. Such organic ligand or linker molecules may be mono-, bi- or polyfunctional organic molecules. In the case of linkers, they are bi- or polyfunctional organic molecules. The capping with organic ligands and the interlinkage with organic linkers is explicitly and extensively described in European Patent Publication EP 1 215 485 A1 which describes nanoparticle-based sensors, wherein the nanoparticles are interlinked and/or capped.

Sometimes, in the present application, reference is made to a "nanocomposite material". This term is meant to designate the material which can be found within the analyte sensitive layer, i.e. it can be the electrically conducting nanoparticles or nanofibres which are embedded in an insulating or semiconducting organic medium, or it can be the ligand-capped nanoparticles or nanofibres, or it can be a network of interlinked nanoparticles or nanofibres which are interlinked with bi-or polyfunctional organic molecules.

Numerous examples of electrically conducting nanoparticles and nanofibres are available, such as but not limited to metal nanoparticles, like gold, platinum, silver n anoparticles, or carbon black nanoparticles or vanadium oxide, molybdenum oxide, tungsten oxide nanofibres and carbon nanotubes.

Preferably, said electrically conductive or semiconductive particles are selected from the group comprising metal particles, i.e. noble metal particles such as Au, Pt, Ag, Pd, coinage metal particles such as Cu, Ni, Fe. It is also possible to use combinations of these metals in a single nanoparticle, i.e. to build an alloy or core/shell metal nanoparticles. It is also possible to use semiconductive nanoparticles, i.e. II/VI semiconductors such as CdS, CdSe, CdTe, ZnS, ZnSe, ZnTe, HgS, HgSe, HgTe, or III/V semiconductors such as GaAs, InP, or provide conducting or semiconducting nanoparticles from organic materials, such as conductive polymers. Further, it is also possible to use as conductive particles carbon black particles or metal-decorated carbon black particles, e.g. Pt/carbon black and/or PtRu/carbon black nanoparticles.

As used herein, the term "electrically conductive" refers to the capability of transporting electrons or holes. An "electrically non-conductive" polymer is a polymer incapable of such transport. In contrast thereto, a "polymer electrolyte", as used herein, is capable of transporting ions, but not electrons or holes.

The methods by which an analyte sensitive layer can be created are known to someone skilled in the art and have also been for example described in EP 1 215 485 A1. They may for example be prepared by layer-by-layer-deposition, which involves the repetitive sequential immersion of a substrate into a dispersion of nanoparticles/nanofibres and a solution of organic component (e.g. the polymers making up the organic polymeric medium or linker molecules). Other possibilities of creating the analyte sensitive layer include dip coating techniques, spin coating techniques, drop casting techniques, spray coating techniques, ink-jet printing, stamping, ligand exchange precipitation from solution,

Langmuir-Blodgett and Langmuir-Schäffer-techniques.

Of paramount importance to the present invention is the presence of a polymeric layer on top of the analyte sensitive layer. The polymeric layer may vary in its thickness and usually has a thickness < 10 μm, preferably < 1 μm, more preferably ≤ 100 nm, even more preferably < 70 nm and most preferably in the range of from 1 nm to 50 nm.

The inventors have found that particularly with such thin polymeric layers, in the range <70 nm, a remarkably enhanced senstivity is achieved whilst at the same time not adversely affecting, i.e. unduly extending, the response times. Typically, the response times achieved by using such thin polymeric layers (< 70 nm) are $t_{90}^{on}$ or $t_{90}^{off}$ < 180 s, as can for example be seen in figure 2 of the present application. $t_{90}^{on}$ is the time required for achieving 90% of the full signal as measured from the time of the beginning of exposure to the analyte. $t_{90}^{off}$ is the time, measured from the end of exposure to analyte, which is required for returning to the pre-analyte-exposure signal (baseline signal) to the point when 90% of such return to the baseline signal has been reached.

The term "fluid phase" is meant to include both liquid phase and gas phase.

Usually, the ratio of the thickness of the polymeric layer to the thickness of the analyte sensitive layer is in the range of from 10000 to 0.001, although, in preferred embodiments, it is in the range of from 10 to 0.01. Accordingly, the analyte sensitive layer itself has a thickness ≤ 1 μm, preferably ≤ 500 nm, more preferably in the range of from 1 nm to 300 nm.

In the examples that follow, typically, both the polymeric layer and the analyte sensitive layer are ≤ 100 nm thick.

Although, in the following specific description, an analyte sensitive layer is described which functions as a chemiresistor sensor, i.e. the electrical resistance is measured in dependence on the presence or absence of an analyte, it is also possible to apply the principle of a polymeric layer on top of an analyte sensitive layer according to the present invention to other forms of sensors such as sensors based on field effect transistors or sensors, wherein the optical properties change, such as absorption properties, or reflectance, or fluorescence or phosphorescence emission properties, as a result of the presence of an analyte to be detected. In the case of a chemiresistor, i.e. involving the measurements of electrical resistance, the substrate further comprises at least one electrode, usually several electrodes and in some embodiments an interdigitated electrode structure. Such interdigitated electrode structures are for example described in EP 1 215 485 A1. In the case, where a field effect transistor is used, the substrate comprises one or several field effect transistors, and the nanocomposite material is in contact preferably through an insulating layer with the conducting channel(s) of the field effect transistor(s) or forms itself the conductive channel(s) of the field effect transistor (s). In the case where the optical properties of the nanoparticles/nanofibres are measured, the polymeric layer on top of the analyte sensitive layer and/or the substrate must be transparent/transmissive for electromagnetic radiation, preferably in the range including UV and infrared, more preferably in the range from 100 nm to 10000 nm, to enable the measurement of the optical properties of the nanoparticles/nanofibres.

The polymeric layer is deposited by methods known to someone skilled in the art, such as spin coating, drop casting, spray coating, layer-by-layer-deposition, ink-jet printing, stamping and other known techniques, for example described in EP 1 215 485A1, which is incorporated herein by reference in its entirety.

The chemiresistor embodiment of the chemical sensor according to the present invention proposed here comprises a few nanometer thick layer of conductive nanocomposite material deposited on a substrate that possesses electrode structures to address the composite material. A layer of organic non-conductive polymer also with a thickness of a few nanometers is deposited on top of the conductive material. The interaction of the conductive composite material with analyte molecules present in the fluid phase leads to a change in the resistance of the conductive material. The measured sensor signal is the normalized change of resistance $\Delta R / R_{ini} = (R_t - R_{ini}) / R_{ini}$, where $R_{ini}$ is the sensor resistance before exposure to analyte, and $R_t$ is the sensor resistance at time t after the start of the analyte exposure. In this sense the chemical sensor proposed here is a chemiresistor.

A schematical drawing of an embodiment of the chemiresistor is shown in Figure 1. The substrate (1) may be glass, ceramic, silicon or plastic substrate, on which interdigitated electrode structures (2) are fabricated via lithographic or print techniques. The nanocomposite material (3) comprises conductive nanoparticles that may be embedded in an organic matrix, preferably an organic polymeric matrix, or may be capped with mono-, bi- or polyfunctional organic ligand molecules, or interlinked with bi- or polyfunctional organic linker molecules. The conductive nanoparticles may comprise, but are not limited to, metal nanoparticles (like Au, Ag, Pt, Pd, Ni, Cu, Fe, alloy and core/shell nanoparticles) semiconductive nanoparticles (like CdS, CdSe, CdTe, ZnS, ZnSe, ZnTe, HgS, HgSe, HgTe, GaAs, InP, conductive polymer nanoparticles), or carbon black and/or metal-decorated carbon black nanoparticles.

The organic matrix or medium may comprise insulating or semi conducting polymers like poly(amide), poly (amido amine), poly(propylene imine), poly(phenylene), poly(ethylene oxide), poly(ethylene imine), hyperbranched poly (ethylene imine) poly(N-isopropyl acrylamide), poly(ethylene glycol), poly(vinyl pyrrolidone), poly(styrene), poly(vinyl alcohol), poly(4-vinyl phenol), poly(epichchlorohydrin), poly(isobutylene), poly(vinyl acetate), poly(methyl methacrylate), poly(caprolactone) fluoropolyols, polysiloxanes, polyaniline, polythiophene, polypyrrol, or copolymers like poly(ethylene

oxide)-*co*-poly(amido amine), poly (ethylene-*co*-vinyl acetate), poly(styrene-*co*-allyl alcohol), poly(vinyl chloride-*co*-vinyl acetate), poly(styrene-*co*-maleic anhydride), poly(vinyl methyl ester-*co*-maleic anhydride) and combinations thereof.

In general, without wishing to be bound by any theory, the inventors believe at present that the polymer layer serves to modify the interaction between the analyte and the nanocomposite conductive layer and thus to act simultaneously as a semi permeable membrane and as an analyte in-situ concentrator unit coupled to the sensitive layer. In addition, since different polymers exhibit varying ability to interact with the same analyte, equal composite chemiresistors coated with compositionally distinct polymer layers will provide different responses to the target analyte, and thus will show specific selectivity patterns. In this manner, an array of sensor elements with distinct response features but based on a single conductive nanocomposite material can be built up.

As outlined above, the chemical sensor arrangement is neither restricted to being a chemiresistor nor to the use of nanoparticles. Modifications of the sensor architecture shown in Figure 1 are also possible. One such modification may concern the composition and the structure of the conductive layer. For example, nanofiber materials, e.g. vanadium pentoxide nanofibers (PCT/EP02/13309, filed on 26.11.2002), molybdenum oxide, tungsten oxide nanofibers or carbon nanotubes may be used as a conductive component instead of the nanoparticle/organic composite material. Another modification may concern the transduction principle involved in the analyte detection. For instance, field-effect-transistors (FET), in which a nanocomposite material is used as an analyte sensitive layer in contact, typically through an insulating layer, with the conductive channel of the FET or forms itself a conductive channel of the FET, may also be considered. It is expected that the approach for sensitivity and selectivity enhancement presented in this application will also be operative in case another conductive material and/or different transduction principles are applied. For example, it is also possible to make use of the unique optical properties of nanoparticles/nanofibers in that such optical properties may change in response to the presence of an analyte. Such optical properties may be the absorption characteristics or the luminescence emission characteristics, such as fluorescence emission or phosphorescence emission. In such a case, it is important that the change of optical properties can be detected either through the polymeric layer or the substrate or both such that, depending on which optical property is to be detected, the polymeric layer or the substrate must be transparent for electromagnetic radiation of the corresponding wavelength.

In the following, reference is made to the figures, wherein

**figure 1** shows a schematical cross section representation of a chemiresistor arrangement according to the present invention,

**figure 2** shows response traces of non-coated and polymer coated chemiresistors (AuHDT), comprising A u-nanoparticles interlinked with hexadecanedithiol molecules (HDT), to 5 000 ppm (volume/volume) of a) toluene, b) 4-methyl-2-pentanone, c) methanol, and d) water, wherein all measurements were performed at room temperature,

**figure 3** shows chemical selectivity patterns of non-coated and polymer-coated AuHDT chemiresistors derived from the vapour sensitivity measurements at 5000 ppm vapour concentration,

**figure 4a** shows a schematic arrangement of one embodiment of a chemical sensor according to the present invention showing a polymeric layer, an analyte sensitive layer and a substrate,

**figure 4b** shows the arrangement of figure 4a, this time with an analyte diffusing into the chemical sensor,

**figure 5a** shows an analyte sensitive layer of AuHDT without a polymeric layer, both as an AFM image, together with a panel showing the thickness of the deposited layer in nm,

**figure 5b** shows an analyte sensitive layer of AuHDT together with a polymeric layer of poly(styrene) on top, shown both as an AFM image, together with an extra panel showing the thickness of the deposited layer in nm,

**figure 5c** showing an analyte sensitive layer of AuHDT together with a polymeric layer of poly(styrene sulfonate) sodium salt and poly(allylamine hydrochloride), shown both as an AFM image, together with an extra panel showing the thickness of the deposited layer in nm.

In the following, reference is now made to the following examples, which are given to illustrate, not to limit the present invention.

## Examples

The approach in the present invention is demonstrated by the following experimental findings. The examples

given below are based on a chemiresistor sensor that comprises gold nanoparticles (AuNP) interlinked with hexadecanedithiol molecules (HDT), but it is clear that the invention is not limited to a chemiresistor nor to the use of the specific particles.

**Example 1**

A) Deposition of the conductive composite material

The fabrication of the conductive material was done via layer-by-layer self-assembly onto BK7 glass substrates equipped with interdigitated electrode structures (IDE). Each substrate supported three IDE comprising 5 nm titanium adhesion layer, on top of which 95 nm gold layer was deposited. Each IDE consisted of 50 finger pairs with 10 μm finger gap, 10 μm finger width and 1800 μm overlap. The so prepared basic composite chemiresistor is hereafter referred to as AuHDT. The preparation of the AuHDT chemiresistor was made as previously described in EP1215485 for other AuNP-based chemiresistors, which is incorporated herein by reference in its entirety. The nanoparticles used had an average diameter in the range of from 3 nm to 6 nm.

**Example 2**

B) Deposition of the polymer layer

The structural formulas and the molecular weights of the polymers used to produce the coating layer are shown in Table 1.
The deposition of the polymer layer on top of the AuHDT chemiresistor was done by spin coating or by layer-by-layer assembly.

*Table 1. Structural formulas and molecular weight of polymers used to produce the coating and solvents used for the preparation of the polymer solutions.*

| Nr. | Polymer /Supplier | Abbreviation in text | Formula | Molecular mass (weight average) | Solvent |
|---|---|---|---|---|---|
| 1 | Poly (ethylene imine) - hyper-branched / HYPERPOLYMERS | PEI | 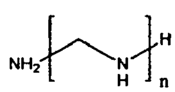 | 5000 | methanol |
| 2 | Poly (N-isopropyl acryl amide) /SIGMA | PNIPAM | 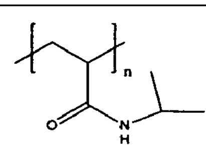 | 20000 - 25000 | methanol |
| 3 | Poly (ethylene glycol) /FLLTKA | PEG | 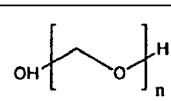 | 20000 | methanol/water 1:1 v |
| 4 | Poly (vinyl pyrrolidone) /ALDRICH | PVPd | 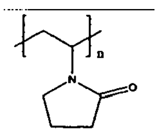 | 40000 | methanol |
| 5 | Poly (styrene) /ALDRICH | PS | 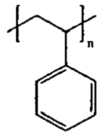 | > 900000 | toluene |

(continued)

| Nr. | Polymer /Supplier | Abbreviation in text | Formula | Molecular mass (weight average) | Solvent |
|---|---|---|---|---|---|
| 6 | Poly (4 - vinyl phenol) /ALDRICH | PVPh | 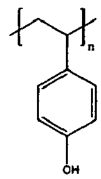 | 20000 | methanol |
| 7 | Poly (styrene sulfonate) sodium salt /ALDRICH | PSS | 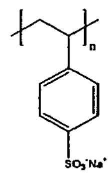 | 70000 | 1M NaCl in water |
| 8 | Poly (allylamine hydrochloride) /ALDRICH | PAH | 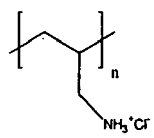 | 65000 | 1M NaCl in water |

a. Deposition by spin coating

Polymers 1-6 in Table 1 were deposited on top of the AuHDT chemiresistors via spin coating. For preparation of the polymer solutions 50 mg of the polymer were dissolved in 5 ml solvent. The solvents used for the preparation of the solutions are also listed in Table 1. The spin coating of polymers on the surface of the AuHDT chemiresistors was performed as follows. First, 0.3 ml of the solvent in which the corresponding polymer was dissolved, were dropped on the surface of the AuHDT chemiresistor. After a few seconds the chemiresistor was spun to produce a slightly wet surface for the subsequent polymer layer deposition. After the spinning was finished, 0.3 ml of the polymer solution was placed on the pre-treated surface of the chemiresistor. The sample was spun again after a few seconds to produce a thin polymer layer on top of the AuHDT chemiresistor.

b. Deposition by LbL assembly

Polymers 7 and 8 in Table 1 were used to prepare a polyelectrolyte coating on top of the AuHDT chemiresistor via layer-by-layer (LbL) deposition. The PSS solution was prepared by dissolving 102.3 mg of PSS in 50 ml 1M solution of NaCl in deionized water (2.92 g NaCl in 50 ml MilliQ water with resistivity 18.2 MΩcm). The PAH solution was prepared by dissolving 45.1 mg of PAH in 50 ml 1M solution of NaCl in deionized water. In this manner, PSS and PAH solutions with concentrations of $10^{-2}$ mol/l (as a monomer concentration) were obtained. The LbL deposition of the polymer layer was performed via sequential dipping of the AuHDT chemiresistor in the solutions of PSS and PAH with rinsing in MilliQ water in between. The dipping procedure was repeated 5 times. In this manner a polymer film on top of the AuHDT chemiresistor comprising 5 bilayers of PSS_PAH was obtained. The procedure for LbL deposition of PSS_PAH bilayers is described in US5208111.

c. Thickness of AuNP/Polymer films and of the polymer layers only determined by Atomic Force Microscopy (AFM)

The thickness measurements were performed by Tapping Mode AFM, using an AFM Dimension 3100 microscope with Nanoscope IV controller (Digital Instruments, USA).
First, a scratch in the film was produced by a needle until the underlying glass ($SiO_2$) substrate was seen in order to remove a thin stripe from the film material. Then the edge of the scratch was imaged by AFM and the film thickness was determined as the height of the scratch. At least 20 measurements on different spots and scratches for each film were performed for a good statistics. The thickness of the polymer layer only was determined as a difference between the thickness of the AuHDT/Polymer system and the thickness of the uncovered AuHDT material.
The results are presented in Table 2 below. In all cases the thickness of the polymer layer was below 70 nm, in most of the cases even below 50 nm. It is particularly in these very thin polymeric layers <70 nm that high sensitivity and fast

response times are observed.

Table 2. Total thickness and polymeric layer thickness of AuHDT chemiresistors as prepared and covered with different polymeric layers

| Sample | Total thickness, nm | Thickness of polymer layer, nm | Remark |
|---|---|---|---|
| AuHDT without polymer | 37 +/- 4 | - | - |
| AuHDT/PEI | 47 +/- 5 | 10 | Micro droplets on the surface |
| AuHDT/PEG | 53+/- 3 | 16 | Micro droplets on the surface |
| AuHDT/PVPd | 76+/-1 | 39 | Continuous film |
| AuHDT/PNIPAM | 76+/-4 | 39 | Continuous film |
| AuHDT/PS | 72+/-5 | 35 | Continuous film |
| AuHDT/PVPh | 103+/-9 | 66 | Continuous, but rough film |
| AuHDT/PSS_PAH | 77+/-10 | 40 | Continuous, but rough film |

Representative AFM images illustrating the above described thickness measurement procedure are shown in figures 5 a-c.

**Example 3**

C) Vapor sensitivity measurements

The responses of the non-covered and polymer-covered AuHDT chemiresistors to vapors of toluene, 1-propanol, 4-methyl-2-pentanone (4M2P), methanol and water with concentrations 400, 2400, and 5000 ppm (volume/volume) were measured as described in EP1215485.

**Example 4**

D) Results

The response traces of the sensors to 5000 ppm (v/v) vapors of toluene, 4M2P, methanol and water are shown in Figure 2 to exemplify the effect of the polymer coating on the response of the AuHDT chemiresistors. The chemical selectivity pattern of each sensor derived from the measured responses is shown in Figure 3. The response times $t_{90}^{on}$ and $t_{90}^{off}$ typically are less than 180 s, as can be seen from figure 2.

The major findings can be summarized as follows:

a. The polymer layer causes an increase in the magnitude of the AuHDT response in cases when the polymer and the vapor possess similar polarity. For instance, response magnitude increase of the coated chemiresistors compared to the non-coated one is seen in case of:

o PS coated AuHDT to toluene - ca. 2x enhancement
o PVPd coated AuHDT to 4M2P - ca. 3x enhancement
o PNIPAM, P VPd a nd PSS_PAH coated A uHDT to water - c a. 4 x e n-hancement
o PNIPAM and P VPd coated A uHDT to methanol - 8 x to 9 x enhancement

b. The polymer layer causes a change in the chemical selectivity pattern of the chemiresistor that depends on the polarity match between the polymer and the vapor. For instance,

o PS coated AuHDT - selectivity pattern changed to stronger hydrophobic one
o PNIPAM and PVPd coated AuHDT - selectivity pattern changed from hydrophobic to more polar one The sensors show highest sensitivity to 4M2P vapors, lower sensitivity to toluene vapors and lowest sensitivity to

alcohol and water vapors
o PSS_PAH coated AuHDT - selectivity pattern switched completely from hydrophobic to hydrophilic one. The sensor shows highest sensitivity to water vapors and lowest sensitivity to toluene vapors

c. The polymer layer causes a characteristic delay in the response time of the sensors. This is of interest when temporal information from the sensor responses is to be obtained, mainly in the case when several chemiresistors without coating and with different coatings are used in an array and the identification of the analyte is done by pattern recognition analysis. Typically, $t_{90}^{on}$ a nd $t_{90}^{off}$ a re less than 180 s.

The features of the present invention disclosed in the specification, the claims and/or in the accompanying drawings, may, both separately, and in any combination thereof, be material for realizing the invention in various forms thereof.

## Claims

**1.** A chemical sensor comprising

- a substrate,
- an analyte sensitive layer on top of said substrate, said analyte sensitive layer comprising electrically conductive or semiconductive particles or fibers, said particles or fibers having an average diameter <1 μm, preferably <500 nm,
- a polymeric layer on top of said analyte sensitive layer, said polymeric layer comprising at least one type of electrically non-conductive or semiconductive polymer or comprising at least one type of polymer electrolyte.

**2.** The chemical sensor according to claim 1, **characterized in that** said analyte sensitive layer comprises electrically conductive or semiconductive particles, said particles having an average diameter < 1 μm, preferably < 500 nm, more preferably a diameter in the range from 1 nm to 100 nm, most preferably 1 nm to 50 nm.

**3.** The chemical sensor according to claim 2, **characterized in that** said analyte sensitive layer further comprises an organic medium, preferably an organic polymeric medium, which is electrically non-conductive or semiconductive, and said electrically conductive or semiconductive particles are embedded in said organic polymeric medium.

**4.** The chemical sensor according to claim 2, **characterized in that** said analyte sensitive layer does not comprise an organic polymeric medium, and said electrically conductive or semiconductive particles are linked to each other by organic linker molecules, or said electrically conductive or semiconductive particles are capped by organic ligand molecules.

**5.** The chemical sensor according to any of the foregoing claims, **characterized in that** said analyte sensitive layer has a thickness ≤ 1 μm, preferably ≤ 500 nm, more preferably in the range of from 1 nm to 300 nm.

**6.** The chemical sensor according to any of the foregoing claims, **characterized in that** said polymeric layer has a thickness < 10 μm, preferably < 1 μm, more preferably ≤ 100 nm, even more preferably < 70 nm and most preferably in the range of from 1 nm to 50 nm.

**7.** The chemical sensor according to any of the foregoing claims, **characterized in that** the ratio of thickness of said polymeric layer to said analyte sensitive layer is in the range of from 10000 to 0.001, preferably in the range of from 10 to 0.01, more preferably 1 to 0.01, and most preferably 1 to 0.1.

**8.** The chemical sensor according to any of the foregoing claims, **characterized in that** said at least one type of electrically non-conductive or semiconductive polymer or said at least one type of polymer electrolyte has an average molecular mass in the range of from 1000 to $10^6$

**9.** The chemical sensor according to any of the foregoing claims, **characterized in that** said at least one type of electrically non-conductive or semiconductive polymer is selected from the group comprising synthetic polymers, i.e. homopolymers like poly(amide), poly(amido amine), poly(propylene imine), poly(phenylene), poly(ethylene oxide), poly(ethylene imine), hyperbranched poly(ethylene imine), poly(N-isopropyl acrylamide), poly(ethylene glycol), poly(vinyl pyrrolidone), poly(styrene), poly(vinyl alcohol), poly(4-vinyl phenol), poly(epichchlorohydrin), poly(isobutylene), poly(vinyl acetate), poly(methyl methacrylate), poly(caprolactone) fluoropolyols, polysiloxanes, polyaniline, polythiophene, polypyrrol, or copolymers like poly(ethylene oxide)-*co*-poly(amido amine), poly (ethylene-*co*-vinyl acetate), poly(styrene-*co*-allyl alcohol), poly(vinyl chloride-*co*-vinyl acetate), poly(styrene-*co*-maleic anhydride), poly (vinyl methyl ester-*co*-maleic anhydride) and combinations thereof, and the at least one type of polymer electrolyte is selected from the g roup comprising synthetic polymer electrolytes such as poly(styrene sulfonate), poly(styrene sulfonate) sodium salt, poly(allylamine hydrochloride), polyacrylic acid, poly(diallyl dimethyl) ammonium chloride, and combinations thereof; or said at least one type of electrically non-conductive or semiconductive polymer or polymer electrolyte is selected from the group comprising natural polymers and natural polymer electrolytes, such as dextran, chitin, chitosan, cellulose, polypeptides, proteins, RNA, DNA,

**10.** The chemical sensor according to any of the foregoing claims, **characterized in that** said substrate has one or several electrodes thereon, or it has one or several field effect transistors thereon, and said analyte sensitive layer on top of said substrate is in contact with said one or several electrodes or in contact, preferably through an insulating layer, with at least one conductive channel of said one or several field effect transistors or forms itself a conductive channel of said one or several field effect transistors.

**11.** The chemical sensor according to any of claims 1-9, **characterized in that** said polymeric layer and/or said substrate is transparent for electromagnetic radiation having a wavelength in the range of from 100 nm to 10000 nm, including UV, visible and IR radiation.

**12.** The chemical sensor according to any of the foregoing claims, **characterized in that** said electrically conductive or semiconductive particles are selected from the group comprising metal particles, i.e. noble metal particles such as Au, Pt, Ag, Pd, coinage metal particles such as Cu, Ni, Fe, combinations of these metals in single nanoparticles, e.g. an alloy or core/shell metal nanoparticles; semiconductive nanoparticles, e.g.. II/VI semiconductors such as CdS, CdSe, CdTe, ZnS, ZnSe, ZnTe, HgS, HgSe, HgTe, or III/V semiconductors such as GaAs, InP; conducting or semiconducting nanoparticles from organic materials, such as conductive polymers; conductive particles, such as carbon black particles or metal-decorated carbon black particles, e.g. Pt/carbon black or PtRu/carbon black nanoparticles.

**13.** The chemical sensor according to any of claims 1, 5-11, **characterized in that** said analyte sensitive layer comprises electrically conductive fibers, said fibers having an average diameter < 1 μm, preferably <500 nm, more preferably < 100 nm.

**14.** The chemical sensor according to claim 13, **characterized in that** said electrically conductive fibers are selected from the group comprising metal oxide nanofibers such as vanadium oxide, molybdenum oxide, tungsten oxide nanofibers, nanofibers from organic materials, e.g. conductive polymers, and carbon nanotubes.

**15.** The chemical sensor according to any of claims 3, 5-12 **characterized in that** said organic medium is electrically insulating or semi-conducting and is made of at least one polymer, said polymer(s) being selected from the group comprising poly(amide), poly(amido amine), poly(propylene imine), poly(phenylene), poly(ethylene oxide), poly (ethylene imine), hyperbranched poly(ethylene imine) poly(N-isopropyl acrylamide), poly(ethylene glycol), poly(vinyl pyrrolidone), poly(styrene), poly(vinyl alcohol), poly(4-vinyl phenol), poly(epichchlorohydrin), poly(isobutylene), poly (vinyl acetate), poly(methyl methacrylate), poly(caprolactone) fluoropolyols, polysiloxanes, polyaniline, polythiophene, polypyrrol, or copolymers like poly(ethylene oxide)-co-poly(amido amine), poly (ethylene-*co*-vinyl acetate), poly(styrene-*co*-allyl alcohol), poly(vinyl chloride-*co*-vinyl acetate), poly(styrene-*co*-maleic anhydride), poly(vinyl methyl ester-*co*-maleic anhydride) and combinations thereof.

**16.** The chemical sensor according to any of claims 4, 5-12, **characterized in that** said organic ligand molecules are mono-, bi- or polyfunctional organic compounds that are able to attach to the surface of the conductive particles with one of their functional groups, such functional group preferably being selected from the groups comprising sulfur-containing functionality, or nitrogen-containing functionality, or phosphor-containing functionality, or oxygen-containing functionality, e.g.

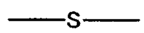
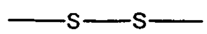
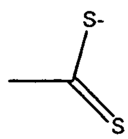
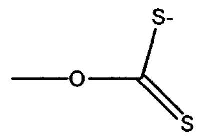

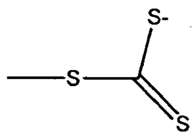
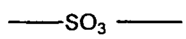
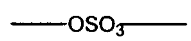

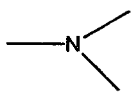
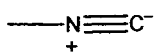
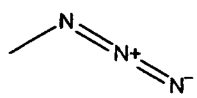
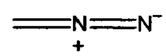

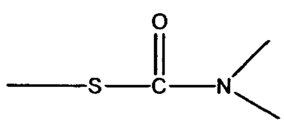
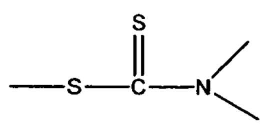
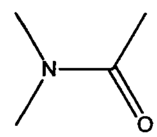

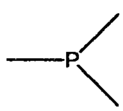
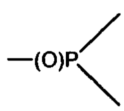
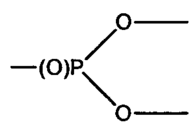
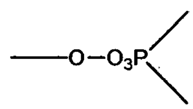

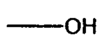
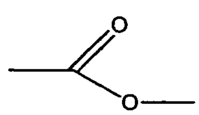

**17.** The chemical sensor arrangement according to any of claims 4, 5-12, **characterized in that** said organic linker molecules are bi- or polyfunctional organic compounds that are able to attach to the surface of the conductive particles with at least two of their functional groups, such functional groups being preferably selected from the groups comprising sulfur-containing functionality, or nitrogen-containing functionality, or phosphor-containing functionality, or oxygen-containing functionality, e.g.

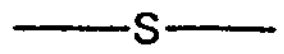 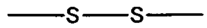 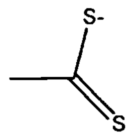 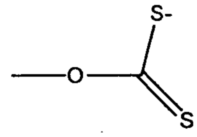

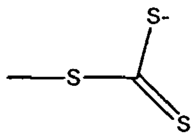 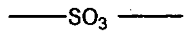 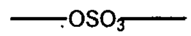

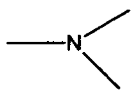 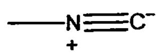 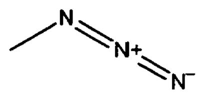 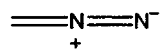

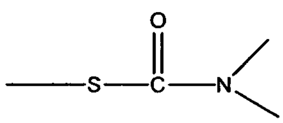 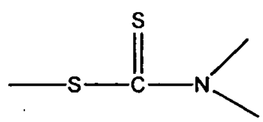 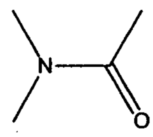

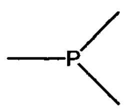 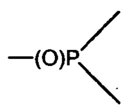 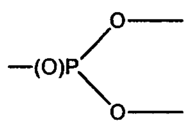 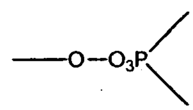

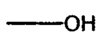 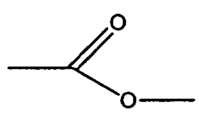

**18.** The chemical sensor according to any of the foregoing claims, **characterized in that** said polymeric layer is continuously and homogeneously distributed over the surface of said analyte sensitive layer.

**19.** The chemical sensor according to any of the foregoing claims, further comprising an analyte to be detected, **characterized in that** said at least one type of electrically non-conductive or semiconductive polymer or polymer electrolyte is selected in terms of its polarity and/or in terms of its electron transport properties, e.g. hole or electron conductors, so as to match the polarity of said analyte to be detected, and/or so as to correlate with the electron donating/withdrawing ability of said analyte to be detected.

**20.** A chemical sensor array comprising at least two sensors, preferably a plurality of sensors according to any of claims 1-19, wherein the individual sensors differ from each other in the type of electrically non-conductive or semiconductive polymer or polymer electrolyte in their respective polymeric layer, and/or in the thickness of their respective polymeric layer, and/or in the particular combination between the polymer and the analyte sensitive layer thus affording a different chemical selectivity and/or different response time for each sensor.

**21.** A method of detecting an analyte using a substrate and an analyte sensitive layer on top of said substrate, said analyte sensitive layer comprising electrically conductive or semiconductive particles or fibers, said particles or fibers having an average diameter < 1 μm, preferably < 500 nm, and further using a polymeric layer on top of said analyte sensitive layer, said polymeric layer comprising at least one type of electrically non-conductive or semiconductive polymer or at least one type of polymer electrolyte, **characterized in that**

- said analyte sensitive layer and/or said polymeric layer is/are exposed to said analyte and said analyte is sorbed in or to at least said polymeric layer on top of said analyte sensitive layer,
- and, upon sorption, preferably upon sorption in or to said polymeric layer and/or to said analyte sensitive layer, said analyte is detected, preferably by measuring a change of electrical resistance, a change in work function, a change of current through a conductive channel of a FET, a change of IR, UV/vis absorbance or transmittance, a change of reflectance, a change of refractive index, a change of luminescence, preferably fluorescence emission, phosphorescence emission or absorbance, of said analyte sensitive layer.

**22.** The method according to claim 21, **characterized in that** said substrate, said analyte sensitive layer and said polymeric layer are as defined in any of claims 1-19.

**23.** A method of fabricating the chemical sensor of any of claims 1-19 or the array according to claim 20, **characterized by** the following steps:

- providing a substrate
- depositing on said substrate an analyte sensitive layer by depositing electrically conductive or semiconductive particles or fibers having an average diameter < 1 $\mu$m, preferably < 500 nm, thereon, preferably by a layer-by-layer deposition, dip-coating, spin-coating, drop casting, spray coating, ink-jet printing, stamping, Langmuir-Blodgett, Langmuir-Schäffer deposition, or ligand-exchange precipitation from solution, during which depositing said particles become embedded in an electrically non-conductive or semiconductive medium, or become linked to each other through organic linker molecules, or remain or become capped by organic ligand molecules,
- depositing on said analyte sensitive layer, a polymeric layer, preferably by a layer-by-layer deposition, dip-coating, spin-coating, drop casting, spray coating, ink-jet printing, stamping, Langmuir-Blodgett, Langmuir-Schäffer deposition,

wherein said substrate, said analyte sensitive layer and said polymeric layer are as defined in any of claims 1-19, and, in the case of an array according to claim 20, repeating these steps as many times as are necessary for producing the at least two, preferably the plurality of sensors.

**24.** Use of the chemical sensor according to any of claims 1-19 or of the array according to claim 20 for detecting an analyte, preferably in the fluid phase.

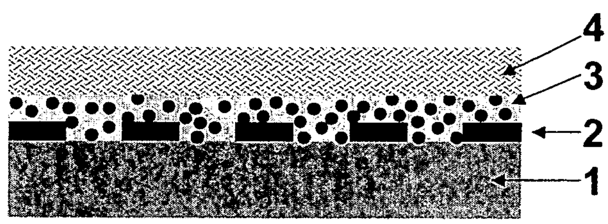


Figure 1

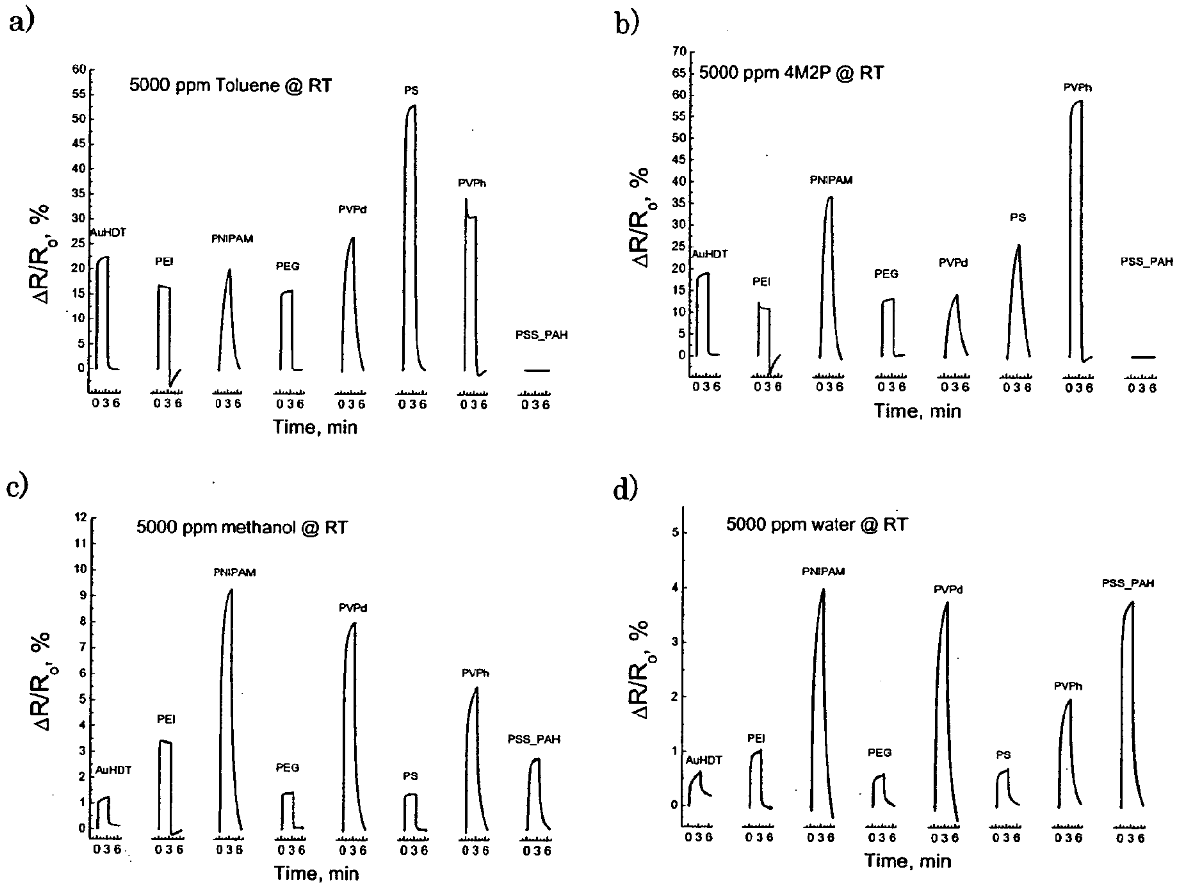
a)
5000 ppm Toluene @ RT
ΔR/R₀, %
AuHDT
PEI
PNIPAM
PEG
PVPd
PS
PVPh
PSS_PAH
Time, min
b)
5000 ppm 4M2P @ RT
ΔR/R₀, %
AuHDT
PEI
PNIPAM
PEG
PVPd
PS
PVPh
PSS_PAH
Time, min
c)
5000 ppm methanol @ RT
ΔR/R₀, %
AuHDT
PEI
PNIPAM
PEG
PVPd
PS
PVPh
PSS_PAH
Time, min
d)
5000 ppm water @ RT
ΔR/R₀, %
AuHDT
PEI
PNIPAM
PEG
PVPd
PS
PVPh
PSS_PAH
Time, min

Figure 2

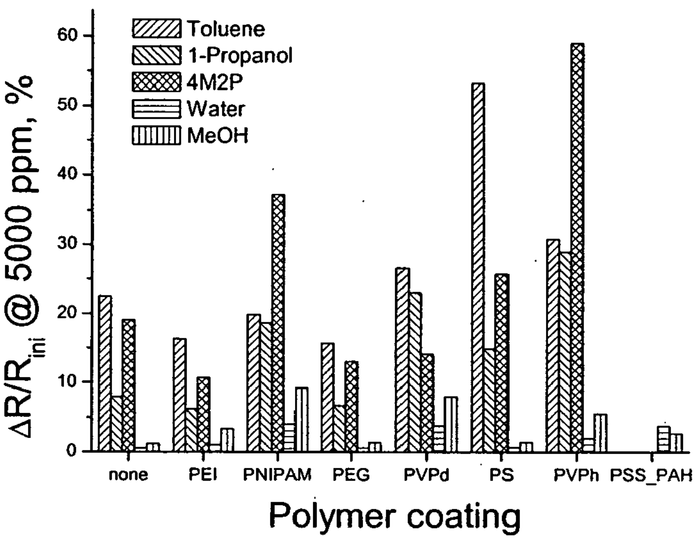
Toluene
1-Propanol
4M2P
Water
MeOH
60
50
40
30
20
10
0
ΔR/R_ini @ 5000 ppm, %
none
PEI
PNIPAM
PEG
PVPd
PS
PVPh
PSS_PAH
Polymer coating

Figure 3

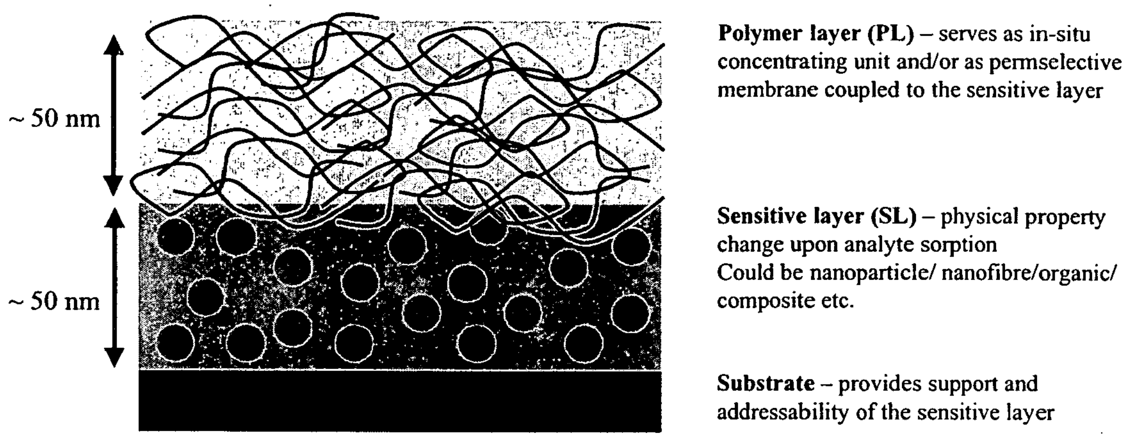
~ 50 nm
~ 50 nm
**Polymer layer (PL)** – serves as in-situ concentrating unit and/or as permselective membrane coupled to the sensitive layer
**Sensitive layer (SL)** – physical property change upon analyte sorption
Could be nanoparticle/ nanofibre/organic/ composite etc.
**Substrate** – provides support and addressability of the sensitive layer

Figure 4a

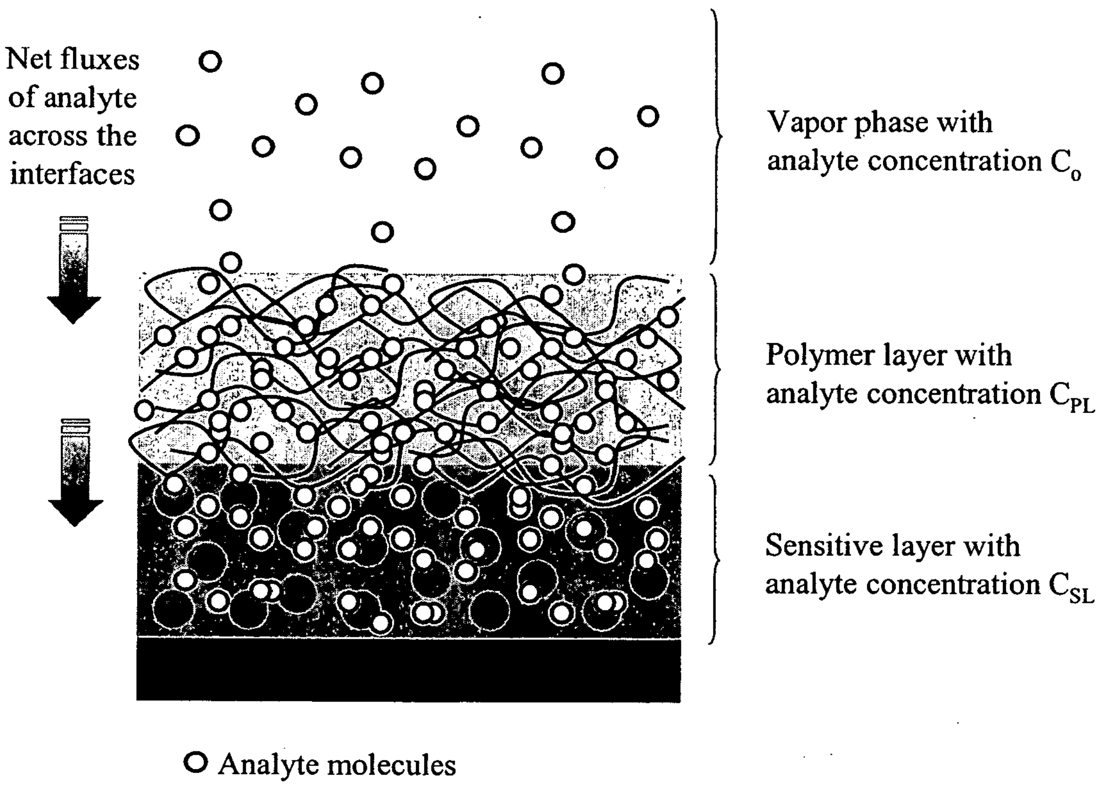
Net fluxes of analyte across the interfaces
Vapor phase with analyte concentration $C_o$
Polymer layer with analyte concentration $C_{PL}$
Sensitive layer with analyte concentration $C_{SL}$
Analyte molecules

Figure 4b

AuHDT without polymer layer

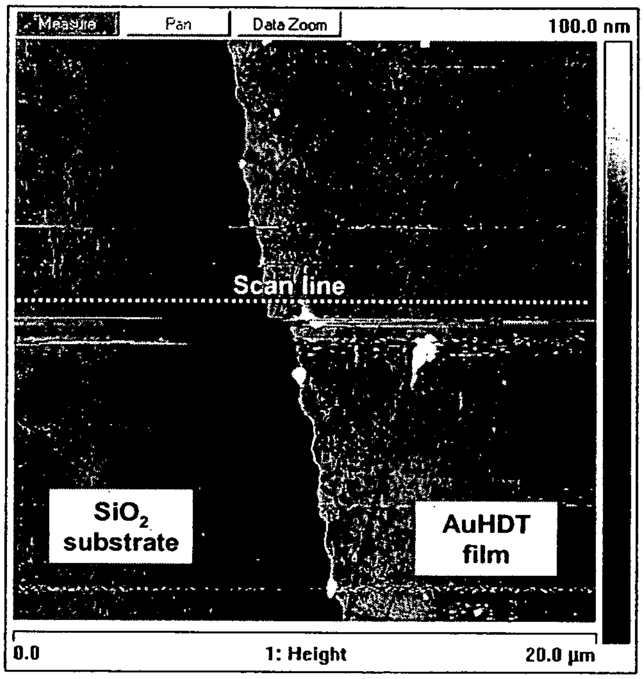


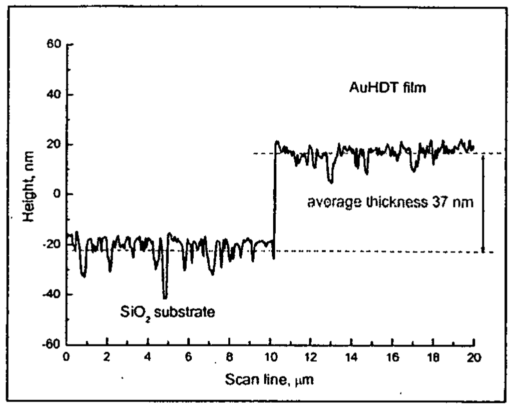


Figure 5a

AuHDT with layer of polystyrene (AuHDT/PS)

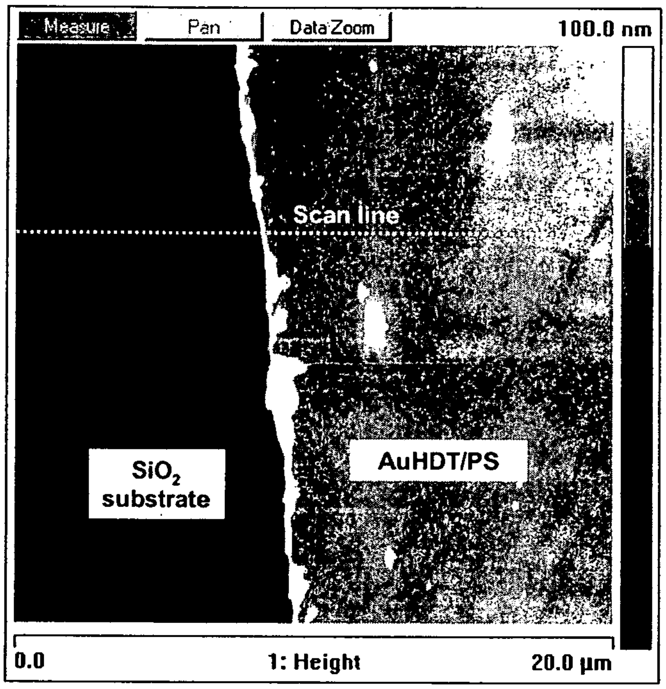


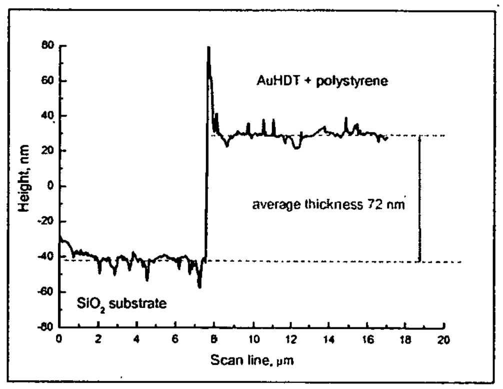


Figure 5b

AuHDT with layer of PSS_PAH (AuHDT/PSS_PAH)

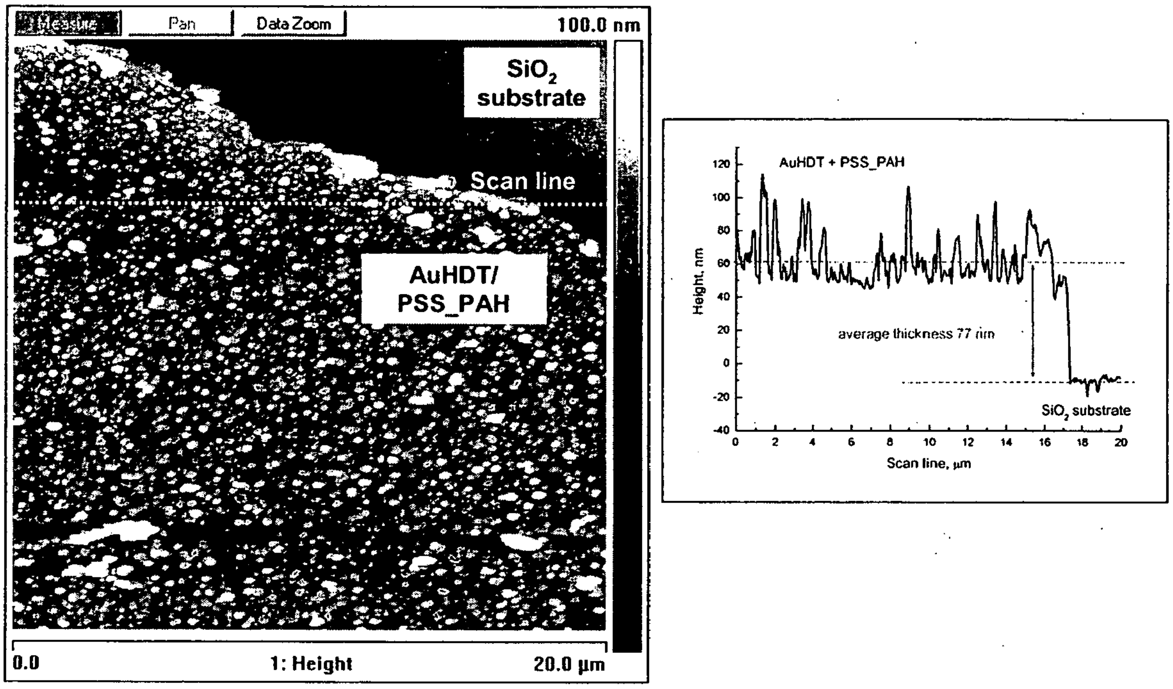


Figure 5c

European Patent Office

# EUROPEAN SEARCH REPORT

Application Number
EP 05 02 5558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 278 061 A (SONY INTERNATIONAL GMBH; MAX-PLANCK-GESELLSCHAFT ZUR FOERDERUNG DER W) 22 January 2003 (2003-01-22)<br>* paragraphs [0014] - [0016] *<br>* paragraphs [0025] - [0027] *<br>* paragraphs [0070], [0071] *<br>----- | 1-24 | INV.<br>G01N27/12 |
| X | WO 00/00808 A (CALIFORNIA INSTITUTE OF TECHNOLOGY; LEWIS, NATHAN, S; DOLEMAN, BRETT,) 6 January 2000 (2000-01-06)<br>* pages 2-3 *<br>* pages 6-10 *<br>* pages 15-16 *<br>* claim 19 *<br>----- | 1-24 | |
| Y | EP 1 529 804 A (MICHIGAN MOLECULAR INSTITUTE) 11 May 2005 (2005-05-11)<br>* paragraphs [0005] - [0007] *<br>* paragraphs [0010], [0011] *<br>* paragraphs [0014], [0015] *<br>* paragraphs [0020] - [0022] *<br>* paragraphs [0025] - [0033] *<br>----- | 1-24 | TECHNICAL FIELDS SEARCHED (IPC)<br>G01N |
| Y | US 5 571 401 A (LEWIS ET AL) 5 November 1996 (1996-11-05)<br>* column 1, line 65 - column 2, line 15 *<br>* column 3, line 40 - column 6, line 46 *<br>----- | 1-24 | |
| Y | US 5 512 882 A (STETTER ET AL) 30 April 1996 (1996-04-30)<br>* abstract *<br>* columns 2-5 *<br>----- | 1-24 | |

The present search report has been drawn up for all claims

| Place of search | Date of completion of the search | Examiner |
|---|---|---|
| Munich | 12 May 2006 | Michalitsch, R |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 02 5558

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2006

| Patent document cited in search report | Publication date | Patent family member(s) | Publication date |
|---|---|---|---|
| EP 1278061 A | 22-01-2003 | CA 2393739 A1 | 19-01-2003 |
| | | CN 1402000 A | 12-03-2003 |
| | | JP 2003139775 A | 14-05-2003 |
| | | US 2003109056 A1 | 12-06-2003 |
| WO 0000808 A | 06-01-2000 | AU 4821099 A | 17-01-2000 |
| | | EP 1084390 A2 | 21-03-2001 |
| EP 1529804 A | 11-05-2005 | JP 2005134392 A | 26-05-2005 |
| | | US 2005090015 A1 | 28-04-2005 |
| US 5571401 A | 05-11-1996 | AT 188291 T | 15-01-2000 |
| | | AU 705825 B2 | 03-06-1999 |
| | | AU 5372896 A | 16-10-1996 |
| | | CA 2215332 A1 | 03-10-1996 |
| | | CN 1184530 A | 10-06-1998 |
| | | DE 69605906 D1 | 03-02-2000 |
| | | DE 69605906 T2 | 13-07-2000 |
| | | DK 820585 T3 | 19-06-2000 |
| | | EP 0820585 A1 | 28-01-1998 |
| | | ES 2144737 T3 | 16-06-2000 |
| | | FI 973802 A | 29-09-1997 |
| | | GR 3033092 T3 | 31-08-2000 |
| | | JP 11503231 T | 23-03-1999 |
| | | JP 2006010703 A | 12-01-2006 |
| | | PT 820585 T | 30-06-2000 |
| | | RU 2145081 C1 | 27-01-2000 |
| | | WO 9630750 A1 | 03-10-1996 |
| | | US 5698089 A | 16-12-1997 |
| | | US 5788833 A | 04-08-1998 |
| US 5512882 A | 30-04-1996 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1215485 A
- WO 9927357 A
- US 6290911 B
- US 6012327 A
- US 6171378 B
- EP 1215485 A1
- EP 0213309 A
- US 5208111 A

### Non-patent literature cited in the description


- **K. K. WONG et al.** *Tencon'95. Proc. IEEE Int. Conference on Microelectronics and VLSI,* 1995, 179-182
- **E. HEDBORG et al.** *Sensors and Actuators B,* 1992, vol. 7, 661-664
- **DAVIS et al.** *Sensors and Actuators B,* 2005, vol. 104, 207-216
- **Q.-Y. CAI et al.** *Anal. Chem.,* 2002, vol. 74, 3533-3539
- **SNOW et al.** *Science,* 2005, vol. 307, 1942-1945